Europäisches Patentamt

European Patent Office

Office européen des brevets

(11) Veröffentlichungsnummer: **0 274 056**
**A1**

(12) **EUROPÄISCHE PATENTANMELDUNG**

(21) Anmeldenummer: 87117713.5

(22) Anmeldetag: 30.11.87

(51) Int. Cl.4 **B25J 15/02** , B25J 9/08

(30) Priorität: 17.12.86 DE 3643122

(43) Veröffentlichungstag der Anmeldung:
13.07.88 Patentblatt 88/28

(84) Benannte Vertragsstaaten:
CH DE FR GB IT LI SE

(71) Anmelder: Siemens Aktiengesellschaft Berlin
und München
Wittelsbacherplatz 2
D-8000 München 2(DE)

(72) Erfinder: Höhne, Werner. Dipl.-Ing.
Klingbachstrasse 9
D-6741 Steinweiler(DE)

(54) Robotergreifer.

(57) Der Greifer soll für unterschiedliche Greifaufgaben leicht umrüstbar sein.

Der Greifer (1) ist in eine separate Antriebseinheit (2) mit einem stirnseitigen Stößel (6) und ein separates anflanschbares Fingergetriebe (3) unterteilt.

**EP 0 274 056 A1**

## Robotergreifer

Die Erfindung bezieht sich auf einen Greifer für einen Roboter mit einem Stößelantrieb für Greiffinger.

Ein derartiger Greifer ist z.B. durch die DE-OS 31 33 205 bekannt geworden. Danach greift ein druckluftbetätigter Stößel in Antriebsarme von Greiffingern ein, die auf Schwenkachsen des Greifers gelagert sind. Durch die Verschiebung des Stößels gegenüber dem Greifer werden die Greiffinger zusammen-oder auseinandergeschwenkt.

Der Erfindung liegt die Aufgabe zugrunde, den Greifer so auszubilden, daß er mit möglichst wenig Änderungsaufwand für unterschiedliche Greifaufgaben geeignet ist.

Diese Aufgabe wird durch die Erfindung gemäß Anspruch 1 gelöst. Die Stirnfläche der Antriebseinheit ist so ausgebildet, daß unterschiedliche Arten von Fingergetrieben mit integrierten oder ansetzbaren Greiffingern an die Antriebseinheit angesetzt werden können. Die einander zugewandten Flächen des Fingergetriebes und der Antriebseinheit sind so ausgebildet, daß sie z.B. durch einfaches Verschrauben aneinanderliegen. Dabei greift der Stößel der Antriebseinheit in eine entsprechende Vertiefung des Fingergetriebes ein, wo er auf entsprechende Betätigungsorgane trifft. Das Fingergetriebe kann leicht durch ein anderes mit gleicher Stirnfläche ersetzt werden.

Nach einer Weiterbildung der Erfindung ist das Fingergetriebe mit zu seiner freien Stirnseite durchgehenden Befestigungselementen versehen. Derartige Befestigungselemente können beispielsweise durch das relativ flache Getriebe in Achsrichtung hindurchragende Befestigungsschrauben sein, die in entsprechende Gewindelöcher der Antriebseinheit eingeschraubt werden. Diese Schrauben sind sehr gut zugänglich, so daß es im Vergleich zum kompletten Greiferwechsel erheblich leichter ist, das Fingergetriebe auszutauschen.

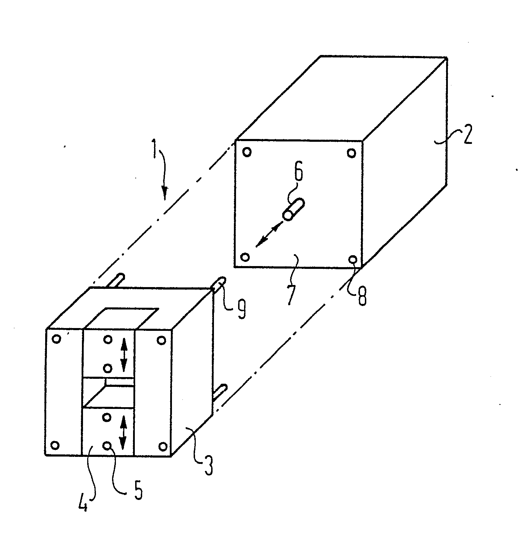

Im folgenden wird die Erfindung anhand eines in der Zeichnung dargestellten Ausführungsbeispieles näher erläutert.

Die dargestellte Figur zeigt schematisiert in perspektivischer Ansicht einen Robotergreifer 1, der aus einer Antriebseinheit 2 und einem Fingergetriebe 3 zusammengesetzt ist. Das Fingergetriebe 3 weist gegeneinander verschiebbare Führungsstücke 4 auf, die mit Befestigungsbohrungen 5 für anzuschraubende Greiffinger versehen sind. Das Fingergetriebe 3 und die Antriebseinheit 2 sind jeweils in sich geschlossene separate Module, deren einander zugewandte Stirnseiten zueinander passend ausgebildet sind. Die Antriebseinheit 2 weist einen zentralen Stößel 6 auf, der senkrecht aus seiner Stirnseite 7 herausragt und in dieser Richtung verschiebbar ist. In die Stirnseite 7 der Antriebseinheit 2 sind außerdem Gewindelöcher 8 eingelassen.

Das Fingergetriebe 3 ist aus Gründen der deutlicheren Darstellung von der Antriebseinheit 2 getrennt dargestellt. Es kann entlang der strichpunktierten Linie auf die Antriebseinheit 2 aufgesetzt werden. Schrauben 9 des Fingergetriebes 3 weisen auf die Gewindelöcher 8 der Antriebseinheit 2. Sie sind durch das Fingergetriebe 3 hindurch zu dessen freier Stirnseite geführt, von wo aus sie betätigt werden. Der Stößel 6 ragt nach dem Zusammensetzen in eine nicht dargestellte Ausnehmung des Fingergetriebes 3, wo er mit seiner Stirnseite auf Antriebsglieder des Fingergetriebes 3 trifft. Diese setzen entsprechend den dargestellten Pfeilen die Schubbewegung des Stößels 6 in Verschiebebewegungen der Führungsstücke 4 um.

## Ansprüche

1. Greifer für einen Roboter mit einem Stößelantrieb für Greiffinger, **dadurch gekennzeichnet,** daß der Greifer (1) eine separate Antriebseinheit (2) aufweist, an deren flanschartiger Stirnseite (7) ein Antriebsstößel (6) und Befestigungsformen für ein separates Fingergetriebe angeordnet sind, das leicht lösbar mit der Antriebseinheit (2) verbunden ist und die Stößelbewegung in die Fingerbewegung umsetzt, und daß der Stößel (6) senkrecht zur Stirnseite (7) der Antriebseinheit verschiebbar ist.

2. Greifer nach Anspruch 1, **dadurch gekennzeichnet,** daß das Fingergetriebe (3) mit zu seiner freien Stirnseite durchgehenden Befestigungselementen (z.B. 9) versehen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 567 208 (BLATT) <br> * Spalte 2, Zeile 67 - Spalte 3, Zeile 4 * <br> --- | 1,2. | B 25 J 15/02 <br> B 25 J 9/08 |
| X | US-A-4 234 223 (O'NEIL) <br> * Spalte 3, Zeilen 14-30 * <br> --- | 1 | |
| X | FR-A-2 527 968 (JAZ S.A.) <br> * Patentansprüche 1,4 * <br> --- | 1 | |
| X | EP-A-0 194 234 (METALMECCANICA GORI & ZUCCHI M.G.Z. S.p.A.) <br> * Spalte 3, Zeilen 14-27 * <br> --- | 1 | |
| A | DE-A-2 461 084 (LGZ LANDIS & GYR AG) <br> * Seite 3, Zeilen 10-15 * <br> ----- | 2 | |

RECHERCHIERTE
SACHGEBIETE (Int. Cl.4)

B 25 J

Der vorliegende Recherchenbericht wurde für alle Patentansprüche erstellt

| Recherchenort | Abschlußdatum der Recherche | Prüfer |
|---|---|---|
| DEN HAAG | 11-03-1988 | LAMMINEUR P.C.G. |